# EUROPEAN PATENT SPECIFICATION

(11) **EP 4 475 691 B1**
(45) Date of publication and mention of the grant of the patent: **29.10.2025**
(21) Application number: 23703061.4
(22) Date of filing: 07.02.2023
(51) Int. Cl.: A24B 13/00, A23G 4/06, A23G 4/18, A23G 4/20

(54) **ORAL NICOTINE PRODUCT WITH CHEWABLE CARRIER ELEMENT**
ORALES NIKOTINPRODUKT MIT KAUBAREM TRÄGERELEMENT
PRODUIT ORAL DE NICOTINE AVEC ÉLÉMENT SUPPORT À MÂCHER

(30) Priority: 09.02.2022 EP 22155850
(43) Date of publication of application: 18.12.2024
(73) Proprietor: Philip Morris Products S.A., 2000 Neuchâtel (CH)
(72) Inventor: STUECKER, Jennifer, 2000 Neuchâtel (CH)
(74) Representative: Reddie & Grose LLP
(86) International application number: PCT/EP2023/052962
(87) International publication number: WO 2023/152119

(56) References cited:
- US-A1- 2014 123 986
- US-A1- 2015 320 077
- US-A1- 2018 220 696

## Description

The present invention relates to a chewable oral nicotine product comprising a chewable wooden carrier element.

Smokeless oral tobacco products, such as snus and snuff, are well known in the art and have for many years provided an oral alternative to traditional smoking products. More recently, a new class of 'modern' oral nicotine products has emerged, which provide a source of nicotine that is typically free from tobacco. Oral nicotine products provide an alternative source of nicotine to e-cigarettes and aerosol-generating devices that deliver aerosolised nicotine through the heating of a nicotine source. One of the most common types of oral nicotine product is the tobacco-free nicotine pouch, which provides a nicotine powder composition inside a small, sealed pouch. During use, nicotine pouches are placed between the lip and the gum of the consumer, so that nicotine can be delivered into the body through the oral mucosal tissues. EP-A-1 617 823 discloses an oral pouch product containing a composition material comprising a biologically active agent such as nicotine, which is ionically bonded to an ionic carbohydrate. The pouch is adapted to provide rapid transmucosal delivery of the nicotine in the consumer's mouth.

Oral nicotine products in the form of lozenges, chewable tablets and chewing gum are also known. For example, WO-A-2017/182084 discloses an oral dosage form comprising nicotine-loaded cation exchange resin particles, wherein the oral dosage form may be a chewing gum, a tablet or a lozenge. US 2014/123986 relates to tobacco compositions and their methods of use and manufacture. Such orally disintegrable tobacco compositions may include films, tabs, shaped parts, gels, consumable units, insoluble matrices and hollow shapes. US 2018/220696 relates to an oral product including a mouth-soluble polymer matrix, cellulosic fibres embedded in the mouth-soluble polymer matrix, and nicotine or a derivative thereof dispersed in the mouth-soluble polymer matrix.

It would be desirable to provide a form of oral nicotine product which delivers nicotine effectively but which provides a novel consumer experience. It would be further desirable to provide such a form of oral nicotine product which can contribute to the improvement of the oral health and hygiene of the consumer and in particular, the dental health of the consumer.

The present invention relates to a chewable oral nicotine product. The oral nicotine product comprises a chewable wooden carrier element. The chewable wooden carrier element is formed of at least one portion of wood, or fibreboard comprising wood fibres. The oral nicotine product further comprises a substrate layer support on the wooden carrier element. The substrate layer comprises nicotine.

According to the invention there is provided a chewable oral nicotine product comprising: a chewable wooden carrier element formed of at least one portion of wood, or fibreboard comprising wood fibres; and a substrate layer supported on the wooden carrier element, the substrate layer comprising nicotine. The wooden carrier element is a fibreboard comprising wood fibres derived from *Salvadora Persica* or the wooden carrier element is impregnated with one or more active compounds derived from *Salvadora Persica.*

The term "chewable" is used herein to refer to a product or element that can be chewed within the mouth of the consumer without dissolving or breaking down. The "chewable wooden carrier element" is a structural element of the oral nicotine product that is sufficiently rigid to provide a solid product and to support the substrate layer but which will become pliable or chewy when chewed within the consumer's mouth, in contact with saliva. Upon chewing of the wooden carrier element, the substrate layer including the nicotine is released into the consumer's mouth.

The wooden carrier element is a fibrous element that may be formed using one or more portions of wood. The term "wood" is used herein to refer to material that has been obtained directly from the trunk or branches of a tree. For the purposes of the invention, this term excludes materials that have derived from wood material.

The wooden carrier element may alternatively be formed using one or more portions of fibreboard, comprising wood fibres. The term "fibreboard" refers to a type of engineered wood material that is formed from wood fibres, which are compressed together with an adhesive or resin to form a rigid board. The wood fibres are obtained directly from wood material and contain lignin, cellulose and hemicellulose. For the purposes of the present invention, the term "wood fibres" is not intended to cover cellulosic fibres that have been derived from wood through some form of chemical treatment or degradation.

The wooden carrier element is a fibreboard comprising wood fibres derived from *Salvadora Persica* or the wooden carrier element is impregnated with one or more active compounds derived from *Salvadora Persica.*

The wooden carrier element of the oral nicotine products of the present invention provides a convenient and simple means of delivering the substrate layer to the consumer, which is both natural and inert. The wooden carrier element additionally provides a novel texture and enables the consumer to chew on the oral nicotine product in order to release the nicotine, rather than simply inserting and retaining the oral nicotine product between the lip and gum. The oral nicotine product therefore provides a unique experience to the consumer. This can be achieved whilst still providing a rapid delivery of nicotine to the consumer.

In addition, the fibrous nature of the wooden carrier element means that the chewing of it can provide benefits to the consumer in terms of their oral health. In particular, the chewing of the wooden carrier element can provide improved dental health and hygiene, with the wooden carrier being effectively able to abrasively clean the teeth during chewing. The type of wood fibres that are used can be especially selected to further enhance the benefits of chewing the wooden carrier element. For example, as discussed below, certain types of wood and wood fibre such as *Salvadora Persica* are known for their dental benefits.

The oral nicotine products of the present invention comprise a wooden carrier element on which is deposited one or more substrate layers. The substrate layer comprises nicotine, which is preferably combined with one or more additional components in order to provide the desired consistency.

The nicotine may be provided in any suitable form. Preferably, the substrate layer comprises one or more nicotine salts. For example, the substrate layer may comprise one or more nicotine salts selected from the list consisting of nicotine lactate, nicotine citrate, nicotine pyruvate, nicotine monotartrate, nicotine bitartrate, nicotine bitartrate dihydrate, nicotine benzoate, nicotine pectate, nicotine alginate, nicotine sulphate, nicotine hydrochloride and nicotine salicylate. Preferably, the substrate layer comprises nicotine lactate or nicotine benzoate.

Alternatively, the substrate layer may comprise liquid nicotine, nicotine gel, stabilised nicotine or nicotine base.

Preferably, the substrate layer comprises at least about 0.5 percent by weight of nicotine, more preferably at least about 1 percent by weight of nicotine, more preferably at least about 1.5 percent by weight of nicotine, on a dry weight basis.

Preferably, the substrate layer comprises no more than about 10 percent by weight of nicotine, more preferably no more than about 8 percent by weight of nicotine, more preferably no more than about 6 percent by weight of nicotine, on a dry weight basis. For example, the substrate layer may comprise between about 0.5 percent by weight and about 10 percent by weight of nicotine, or between about 1 percent by weight and about 8 percent by weight, or between about 1.5 percent by weight and about 6 percent by weight, on a dry weight basis.

Preferably, each individual oral nicotine product contains between about 0.4 mg and about 1.5 mg of nicotine, more preferably between about 0.6 mg and about 1 mg of nicotine. The amount of nicotine in the product can be varied depending upon the desired strength.

Preferably, the substrate layer comprises 0 percent by weight of tobacco. Preferably, the substrate layer is free from tobacco. Preferably, the chewable oral nicotine product comprises 0 percent by weight of tobacco. Preferably, the chewable oral nicotine product is free from tobacco.

Preferably, upon chewing, the nicotine is delivered from the oral nicotine product into the consumer's mouth in between about 10 minutes and about 30 minutes, more preferably in between about 12 minutes and about 20 minutes. The delivery of nicotine is therefore sustained over a period of half an hour or less, whilst the consumer continues chewing on the oral nicotine product.

Preferably, the substrate layer further comprises one or more gum binders. The one or more gum binders are preferably water soluble. The inclusion of a gum binder in the substrate layer of the oral nicotine products of the present invention may advantageously provide an improved level of elasticity and texture, to optimise the chewiness of the oral nicotine product.

Suitable gum binders would be known to the skilled person and include but are not limited to natural gums such as gum Arabic, xanthan gum, gellan gum and combinations thereof.

The substrate layer may comprise a conventional gum base or chewing gum formulation, to which the nicotine can be added. Suitable gum bases or chewing gum formulations would be known to the skilled person.

The substrate layer may comprise a gum base formed with one or more biocompatible particulate polymers. The biocompatible particulate polymers may be obtained from algae, corn, or vegetables, for example. For example, the gum base may comprise between about 0.25 percent by weight and about 18 percent by weight of the one or more biocompatible particulate polymers, or between about 0.3 percent by weight and about 11 percent by weight of the one or more biocompatible polymers, on a dry weight basis.

In certain embodiments of the invention, as described in more detail below, the substrate layer forms the outer layer of the oral nicotine product. The substrate layer therefore effectively coats the wooden carrier element. In such embodiments, the substrate layer preferably further comprises a coating compound. Suitable coating compounds would be known to the skilled person and are set out below in relation to the optional outer coating layer.

The substrate layer may additionally comprise one or more additives, such as flavourants, sweeteners, colourants, or a combination thereof.

Preferably, any particulate material that is included in the substrate layer has a particle size between about 200 microns and about 1200 microns, more preferably between about 500 microns and about 900 microns. This ensures that the particles do not adversely impact the texture of the substrate layer.

Preferably, the substrate layer has an average thickness of at least about 1 millimetre, more preferably at least about 1.5 millimetres, more preferably at least about 2 millimetres and more preferably at least about 2.5 millimetres. The substrate layer may have an average thickness of up to 3.5 millimetres.

Preferably, the oral nicotine products of the present invention comprise at least about 35 percent by weight of the substrate layer, more preferably at least 45 percent by weight of the substrate layer, on a dry weight basis. The oral nicotine product may comprise up to about 50 percent by weight of the substrate layer, more preferably up to about 55 percent by weight of the substrate layer, on a dry weight basis.

As defined above, the wooden carrier element of the oral nicotine products according to the invention is formed of one or more portions of wood or fibreboard made with wood fibres. In some preferred embodiments, the wooden carrier element is formed of a single portion of wood or fibreboard. In other preferred embodiments, the wooden carrier element is formed of two or more portions of wood or fibreboard, for example, where a layered structure with the substrate layer is provided.

The wooden carrier element may be formed from wood or wood fibres from any suitable tree or plant. Suitable trees and plants include but are not limited to: *Salvadora Persica, Catharanthus roseus* (periwinkle), *Glycyrrhiza glabra* (liquorice), *Calatola Costaricensis, Rhododendron tomentosum, Olea Europea.*

In particularly preferred embodiments, the wooden carrier element is formed of wood or wood fibres derived from *Salvadora Persica,* also known as the 'toothbrush tree'. *Salvadora Persica* is a small evergreen shrub or tree having soft whitish yellow wood, which is native to the Middle East, Africa and India. In certain parts of the world, the sticks from *Salvadora Persica* are commonly used as chewing sticks for oral hygiene.

The use of wood or wood fibres of *Salvadora Persica* for forming the wooden carrier element of the oral nicotine products of the present invention is particularly advantageous due to the known oral health benefits provided by this material. *Salvadora Persica* contains many active ingredients, which have been shown to promote dental hygiene and health. These include alkaloids, which have an antibacterial effect, calcium, chlorides, fluoride, sulphur, vitamin C, resins which form a protective layer over the enamel to reduce the likelihood of dental caries, silica which is a natural abrasive that can remove stains from teeth, tannins and essential oils. Overall, it is widely acknowledged that *Salvadora Persica* is effective in fighting tooth decay, providing protection against tartar and plaque, removal of bad breath and providing gum protection.

Through the use of a wooden carrier element comprising *Salvadora Persica* in the oral nicotine products of the present invention, it is therefore possible to provide the consumer with effective delivery of nicotine in combination with a range of oral health and hygiene benefits.

Alternatively or in addition to the use of *Salvadora Persica* wood or wood fibres to form the wooden carrier element of the oral nicotine products of the present invention, the wooden carrier element may be impregnated with one or more active compounds that are derived from *Salvadora Persica.* Such active compounds from *Salvadora Persica* may also be incorporated into the substrate layer, if desired.

Alternatively or in addition, the wooden carrier element may be impregnated with one or more additives, for example suitable additives providing a dental benefit to the consumer. For example, in certain preferred embodiments of the invention, the wooden carrier element is impregnated with xylitol, natural calcium, phosphate minerals, fluoride, coconut oil monolaurin, or combinations thereof. These additives can contribute to the reduction of plaque build-up and tooth decay and may provide antibiotic properties.

The wooden carrier element preferably has an average thickness of at least about 2 millimetres, more preferably at least about 2.5 millimetres and more preferably at least about 3 millimetres. The thickness of the wooden carrier element may be up to about 4 millimetres, or up to about 6 millimetres.

Preferably, the oral nicotine products of the present invention comprise at least about 35 percent by weight of the wooden carrier element, more preferably at least 40 percent by weight of the wooden carrier element, on a dry weight basis. The oral nicotine product may comprise up to about 55 percent by weight of the wooden carrier element, more preferably up to about 45 percent by weight of the wooden carrier element, on a dry weight basis.

In the oral nicotine products according to the present invention, the substrate layer is supported or carried on the wooden carrier element. The oral nicotine products may take several different forms, with the substrate layer and the wooden carrier element combined in different ways.

In some preferred embodiments of the present invention, the substrate layer is deposited over at least a portion of the outer surface of the wooden carrier element. In such embodiments, the wooden carrier element therefore provides the core portion of the oral nicotine product, with the substrate layer provided over some or all of the outer surface.

In such embodiments, the substrate layer may be provided over the entire outer surface of the wooden carrier element. In this case, the substrate layer envelops the wooden carrier element and forms an entire layer around the wooden carrier element. The substrate layer may form the outer layer of the oral nicotine product, such that no additional layers are provided over the substrate layer. Alternatively, the oral nicotine product may further comprise an outer coating layer over the substrate layer, which encapsulates both the wooden carrier element and the substrate layer. The outer coating layer will be described in more detail below.

Where the substrate layer provides the outer layer of the oral nicotine product, the substrate layer may further comprise one or more coating compounds. The provision of the one or more coating compounds in the substrate layer may advantageously improve the textural properties of the substrate layer, or its appearance on the exterior of the oral nicotine product. Suitable coating compounds for inclusion in the substrate layer would be known to the skilled person but include sugars and sugar alcohols.

The substrate layer may alternatively be provided over only a part of the outer surface of the wooden carrier element, such that the wooden carrier element is exposed over a part of the surface of the oral nicotine product. This arrangement may be used to provide a distinctive appearance to the oral nicotine product.

The wooden carrier may optionally comprise a grooved surface comprising a plurality of grooves on the outer surface thereof, wherein the substrate layer is deposited over the grooved surface such that the substrate layer extends into the plurality of grooves. The substrate layer may be deposited within the grooves only, so that the wooden carrier element remains exposed in the regions between the grooves. Alternatively, the substrate layer may cover the entire grooved surface of the wooden carrier element.

The grooved surface may advantageously increase the surface area of contact between the wooden carrier element and the substrate layer, thereby improving the adhesion between the two components of the oral nicotine product. Furthermore, it has been found that the portions of the substrate layer that are deposited within the grooves remain longer in the wooden carrier element and can thereby provide a more long lasting consumer experience.

In alternative preferred embodiments of the present invention, the oral nicotine product comprises a layered structure having the substrate layer provided between opposed portions of the wooden carrier element. In such embodiments, the oral nicotine product therefore provides a sandwich type structure, with the substrate layer sandwiched between upper and lower layers of the wooden carrier element. The oral nicotine products having this arrangement may optionally further comprise an outer coating layer. Alternatively, the outer surface of the upper and lower layers of the wooden carrier element may provide the outer surface of the oral nicotine product.

In further preferred embodiments of the present invention, the wooden carrier element of the oral nicotine product comprises one or more internal channels, wherein the substrate layer is provided within the one or more internal channels. Preferably, the wooden carrier element comprises a single central channel in which the substrate layer is provided. With this arrangement, the substrate layer forms the core region of the oral nicotine product, with the wooden carrier element provided around it. Preferably, the wooden carrier element extends all of the way around the substrate layer. The oral nicotine products having this arrangement may optionally further comprise an outer coating layer. Alternatively, the outer surface of the wooden carrier element may provide the outer surface of the oral nicotine product.

As described above, in several of the embodiments of the present invention, the oral nicotine product may comprise an outer coating layer that covers and encapsulated the wooden carrier element and the substrate layer. Depending upon the arrangement of the wooden carrier element and the substrate layer, the outer coating layer may be provided over the substrate layer, or over the outer surface of the wooden carrier element, or both.

The outer coating layer may be used as a barrier layer to provide protection to the underlying substrate layer and wooden carrier element. For example, the outer coating layer may protect the underlying components from environmental humidity, or gases. It may also minimise the risk of loss of active compounds from the oral nicotine product. The outer coating layer may additionally be used to provide a desirable texture at the exterior of the oral nicotine product. For example, the outer coating layer may provide a hard, smooth and non-sticky surface such that the consumer can more conveniently handle the oral nicotine product. The provision of a non-sticky surface may also improve the handling and storage of the oral nicotine products.

The outer coating layer will typically be relatively brittle and crunchy, so that the consumer is provided with a unique experience upon chewing of the oral nicotine product.

Suitable edible coating compounds for forming the outer coating layer would be known to the skilled person, such as the coating compounds used in chewing gum products. The outer coating layer may include, for example, one or more sugars, sugar alcohols (such as xylitol, sorbitol or mannitol), gums (such as gum Arabic) or a combination thereof. The outer coating layer may additionally comprise one or more additives, such as flavourants, sweeteners, colourants, or a combination thereof.

Preferably, the outer coating layer has a thickness of up to about 1 millimetre, more preferably up to about 0.5 millimetres, and more preferably up to 0.3 millimetres.

The outer coating layer will typically be applied to the combined wooden carrier element and substrate layer in the form of a coating syrup, using known coating techniques. The coating syrup will then be dried in order to harden it.

The oral nicotine products of the present invention may be formed with any suitable shape. Preferably, the oral nicotine products are in the form of a rounded tablet, or a flat rectangular or lozenge shape.

The dimensions of the oral nicotine products are preferably adapted such that the oral nicotine products are suitable for placing in the consumer's mouth.

Preferably, the oral nicotine products have a length of at least about 15 millimetres, more preferably at least about 20 millimetres, wherein the length corresponds to the longest dimension of the oral nicotine product. Preferably, the oral nicotine products have a length of up to about 35 millimetres, more preferably up to about 30 millimetres. The length of the oral nicotine product may therefore be between about 15 millimetres and about 35 millimetres, or between about 20 millimetres and about 30 millimetres.

Preferably, the oral nicotine products have a width of at least about 8 millimetres, more preferably at least about 10 millimetres. Preferably, the oral nicotine products have a width of up to about 20 millimetres, more preferably up to about 15 millimetres. The width of the oral nicotine product may therefore be between about 8 millimetres and about 20 millimetres, or between about 10 millimetres and about 15 millimetres.

Preferably, the oral nicotine products have a thickness of at least about 4 millimetres, more preferably at least about 5 millimetres. Preferably, the oral nicotine products have a thickness of up to about 10 millimetres, more preferably up to about 8 millimetres. The thickness of the oral nicotine product may therefore be between about 4 millimetres and about 10 millimetres, or between about 5 millimetres and about 8 millimetres.

Specific embodiments will be further described, by way of example only, with reference to the accompanying drawings in which:
Figure 1 shows a schematic cross-sectional view of an oral nicotine product according to a first embodiment of the invention;
Figure 2 shows a schematic cross-sectional view of an oral nicotine product according to a second embodiment of the invention;
Figure 3 shows a schematic cross-sectional view of an oral nicotine product according to a third embodiment of the invention;
Figure 4 shows a schematic cross-sectional view of an oral nicotine product according to a fourth embodiment of the invention;
Figure 5 shows a schematic cross-sectional view of an oral nicotine product according to a fifth embodiment of the invention;
Figure 6 shows a schematic cross-sectional view of an oral nicotine product according to a sixth embodiment of the invention; and
Figure 7 shows a schematic cross-sectional view of an oral nicotine product according to a seventh embodiment of the invention.

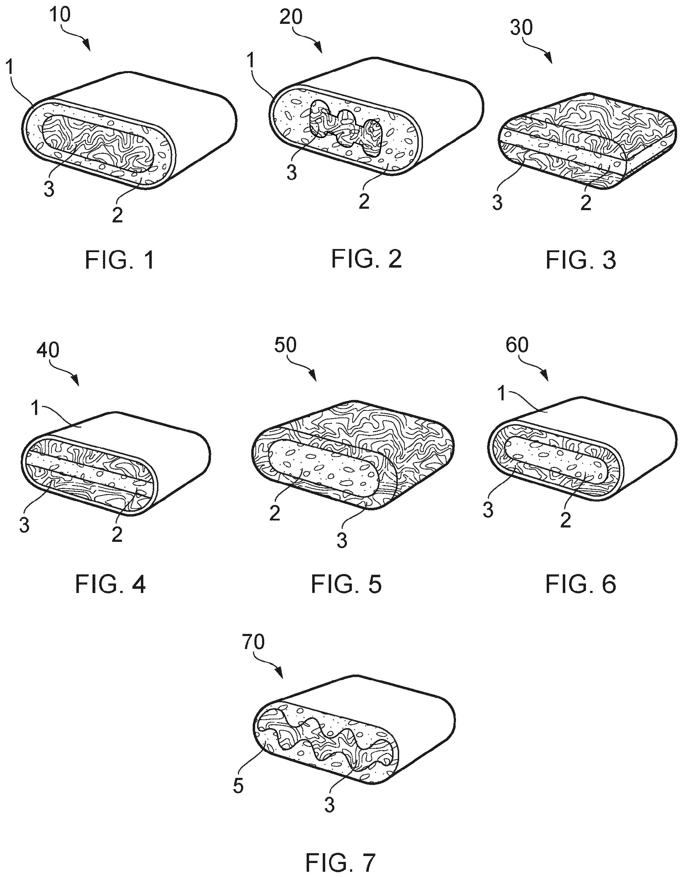

Each of the oral nicotine products shown in Figures 1 to 6 comprises a substrate layer 2 and a wooden carrier element 3. In the embodiments shown in Figures 1, 2, 4 and 6, an outer coating layer 1 is also provided. The oral nicotine products are in the form of a lozenge, having an approximately stadium shaped cross-section, to provide rounded edges. The oral nicotine products each have a length of 20 millimetres, a width of 10 millimetres and a thickness of 5 millimetres.

In all of the oral nicotine products shown in Figures 1 to 6, the wooden carrier element 3 may be formed of a fibreboard material comprising wood fibres derived from *Salvatora Persica.* The substrate layer 2 comprises nicotine in combination with a gum base. The coating layer 1 comprises one or more sugar alcohols. The embodiments shown in Figures 1 to 6 therefore differ only in the way in which the substrate layer 2, wooden carrier element 3 and outer coating layer 1 (where present) are arranged relative to each other.

In the oral nicotine product 10 shown in Figure 1, the wooden carrier element 3 is in the centre of the product, forming the core region. The substrate layer 2 is provided over the entire outer surface of the wooden carrier element 3. The outer coating layer 1 is provided over the substrate layer 2 and fully encapsulates the substrate layer 2 and the wooden carrier element 3.

Figure 2 shows an oral nicotine product 20 having a similar overall structure but in which the outer surface of the wooden carrier layer 3 comprises a series of grooves 4 into which the substrate layer 2 is deposited. The substrate layer 2 fills the grooves 4 and covers the entire outer surface of the wooden carrier element 3. As in the embodiment shown in Figure 1, the outer coating layer 1 entirely encapsulates the substrate layer 2 and the wooden carrier element.

The oral nicotine product 30 shown in Figure 3 has a layered arrangement comprising a central substrate layer 2 sandwiched between two layers of the wooden carrier element 3. The wooden carrier element 3 consists of two separate layers: an upper layer 3a and a lower layer 3b, with the substrate layer 2 sandwiched between them. The outer surfaces of the wooden carrier element 3 are exposed to provide the outer surface of the oral nicotine product 30.

The oral nicotine product 40 shown in Figure 4 has a similar layered arrangement of the wooden carrier element 3 and the substrate layer 2 as the oral nicotine product 30 of Figure 3. However, the oral nicotine product 40 further comprises an outer coating layer 1 encapsulating the substrate layer 2 and the layers of the wooden carrier element 3.

In the oral nicotine product 50 shown in Figure 5, the substrate layer 2 is in the centre of the product, forming the core region. The wooden carrier element 3 extends all of the way around the substrate layer 2 so that the substrate layer is effectively contained within a channel inside the wooden carrier element 3. The outer surface of the wooden carrier element 3 provides the outer surface of the oral nicotine product 50.

The oral nicotine product 60 shown in Figure 6 has a similar arrangement of the wooden carrier element 3 and the substrate layer 2 as the oral nicotine product 50 shown in Figure 5. However, the oral nicotine product 60 further comprises an outer coating layer 1 encapsulating the wooden carrier element 3 and the substrate layer 2.

The oral nicotine product 70 shown in Figure 7 comprises a wooden carrier element 3 as described above in relation to the embodiments shown in Figures 1 to 6. The wooden carrier element has a grooved outer surface, similar to that of the embodiment of Figure 2. However, the oral nicotine product 70 comprises a substrate layer 5 having a different composition to the substrate layers 2 of the products shown in Figures 1 to 6. The substrate layer 5 comprises nicotine and a gum base, but in addition includes at least one coating compound. The outer surface of the substrate layer 5 provides the outer layer of the oral nicotine product 70.

## Claims

1. A chewable oral nicotine product comprising:
a chewable wooden carrier element formed of at least one portion of wood, or fibreboard comprising wood fibres; and
a substrate layer comprising nicotine supported on the wooden carrier element, wherein the wooden carrier element is a fibreboard comprising wood fibres derived from *Salvadora Persica* or wherein the wooden carrier element is impregnated with one or more active compounds derived from *Salvadora Persica.*

2. A chewable oral nicotine product according to claim 1, wherein the substrate layer further comprises one or more gum binders.

3. A chewable oral nicotine product according to claim 1 or 2, wherein the substrate layer is deposited over at least a portion of the outer surface of the wooden carrier element.

4. A chewable oral nicotine product according to claim 3, wherein the substrate layer forms an outer layer of the oral nicotine product.

5. A chewable oral nicotine product according to claim 4, wherein the substrate layer further comprises a coating compound.

6. A chewable oral nicotine product according to any preceding claim, wherein the wooden carrier element comprises a grooved surface comprising a plurality of grooves and wherein the substrate layer is deposited over the grooved surface such that the substrate layer extends into the plurality of grooves.

7. A chewable oral nicotine product according to any of claims 1 to 5, wherein the oral nicotine product comprises a layered structure having the substrate layer provided between opposed portions of the wooden carrier element.

8. A chewable oral nicotine product according to any of claims 1 to 5, wherein the wooden carrier element comprises one or more internal channels and wherein the substrate layer is provided within the one or more internal channels.

9. A chewable oral nicotine product according to any preceding claim, wherein the substrate layer has a thickness of at least about 1 millimetre.

10. A chewable oral nicotine product according to any of claims 1 to 3, or 6 to 9, further comprising an outer coating layer encapsulating the wooden carrier element and the substrate layer.

11. A chewable oral nicotine product according to claim 10, wherein the outer coating layer comprises at least one sugar or sugar alcohol.

12. A chewable oral nicotine product according to any preceding claim, wherein the wooden carrier element is impregnated with one or more additives.

13. A chewable oral nicotine product according to claim 12, wherein the wooden carrier element is impregnated with xylitol.

## Patentansprüche

1. Kaubares orales Nikotinprodukt, aufweisend:
ein kaubares Holzträgerelement, das wenigstens aus einem Abschnitt aus Holz oder einer Holzfasern umfassenden Faserplatte gebildet ist; und
eine Nikotin umfassende Substratschicht, die auf dem Holzträgerelement aufgebracht ist, wobei das Holzträgerelement eine Faserplatte ist, die aus *Salvadora Persica* gewonnene Holzfasern umfasst, oder wobei das Holzträgerelement mit einer oder mehreren aus *Salvadora Persica* gewonnenen aktiven Verbindungen imprägniert ist.

2. Kaubares, orales Nikotinprodukt nach Anspruch 1, wobei die Substratschicht ferner ein oder mehrere Gummibindemittel aufweist.

3. Kaubares orales Nikotinprodukt nach Anspruch 1 oder 2, wobei die Substratschicht auf wenigstens einem Abschnitt der Außenfläche des Holzträgerelements aufgebracht ist.

4. Kaubares orales Nikotinprodukt nach Anspruch 3, wobei die Substratschicht eine Außenschicht des oralen Nikotinprodukts bildet.

5. Kaubares orales Nikotinprodukt nach Anspruch 4, wobei die Substratschicht ferner eine Beschichtungsverbindung aufweist.

6. Kaubares orales Nikotinprodukt nach einem beliebigen vorhergehenden Anspruch, wobei das Holzträgerelement eine genutete Fläche aufwesit, die eine Mehrzahl von Nuten aufweist, und wobei die Substratschicht über der genuteten Fläche derart abgeschieden ist, dass sich die Substratschicht in die Mehrzahl von Nuten erstreckt.

7. Kaubares orales Nikotinprodukt nach einem der Ansprüche 1 bis 5, wobei das orale Nikotinprodukt eine geschichtete Struktur mit der zwischen gegenüberliegenden Abschnitten des Holzträgerelements vorgesehenen Substratschicht aufweist.

8. Kaubares orales Nikotinprodukt nach einem der Ansprüche 1 bis 5, wobei das Holzträgerelement einen oder mehrere innere Kanäle aufweist und wobei die Substratschicht innerhalb des einen oder der mehreren inneren Kanäle vorgesehen ist.

9. Kaubares orales Nikotinprodukt nach einem beliebigen vorhergehenden Anspruch, wobei die Substratschicht eine Dicke von wenigstens etwa 1 Millimeter aufweist.

10. Kaubares orales Nikotinprodukt nach einem der Ansprüche 1 bis 3 oder 6 bis 9, ferner aufweisend eine äußere Überzugsschicht, die das Holzträgerelement und die Substratschicht einkapselt.

11. Kaubares orales Nikotinprodukt nach Anspruch 10, wobei die äußere Überzugsschicht wenigstens einen Zucker oder Zuckeralkohol umfasst.

12. Kaubares orales Nikotinprodukt nach einem beliebigen vorhergehenden Anspruch, wobei das Holzträgerelement mit einem oder mehreren Additiven imprägniert ist.

13. Kaubares orales Nikotinprodukt nach Anspruch 12, wobei das Holzträgerelement mit Xylit imprägniert ist.

## Revendications

1. Produit de nicotine à mâcher comprenant :
un élément de support en bois à mâcher formé d'au moins une partie de bois, ou de panneau de fibres comprenant des fibres de bois ; et
une couche de substrat comprenant de la nicotine supportée sur l'élément de support en bois, dans laquelle l'élément de support en bois est un panneau de fibres comprenant des fibres de bois dérivées de *Salvadora Persica* ou dans laquelle l'élément de support en bois est imprégné d'un ou plusieurs composés actifs dérivés de *Salvadora Persica.*

2. Produit buccal à base de nicotine à mâcher selon la revendication 1, dans lequel la couche de substrat comprend en outre un ou plusieurs liants de gomme.

3. Produit buccal à base de nicotine à mâcher selon la revendication 1 ou 2, dans lequel la couche de substrat est déposée sur au moins une partie de la surface extérieure de l'élément de support en bois.

4. Produit buccal à base de nicotine à mâcher selon la revendication 3, dans lequel la couche de substrat forme une couche externe du produit buccal à base de nicotine.

5. Produit buccal à base de nicotine à mâcher selon la revendication 4, dans lequel la couche de substrat comprend en outre un composé de revêtement.

6. Produit buccal à base de nicotine à mâcher selon l'une quelconque des revendications précédentes, dans lequel l'élément de support en bois comprend une surface rainurée comprenant une pluralité de rainures et dans lequel la couche de substrat est déposée sur la surface rainurée de telle sorte que la couche de substrat s'étende dans la pluralité de rainures.

7. Produit buccal à base de nicotine à mâcher selon l'une quelconque des revendications 1 à 5, dans lequel le produit buccal à base de nicotine comprend une structure en couches ayant la couche de substrat prévue entre des parties opposées de l'élément de support en bois.

8. Produit buccal à base de nicotine à mâcher selon l'une quelconque des revendications 1 à 5, dans lequel l'élément de support en bois comprend un ou plusieurs canaux internes et dans lequel la couche de substrat est prévue à l'intérieur du ou des canaux internes.

9. Produit buccal à base de nicotine à mâcher selon l'une quelconque des revendications précédentes, dans lequel la couche de substrat a une épaisseur d'au moins environ 1 millimètre.

10. Produit à mâcher à base de nicotine orale selon l'une quelconque des revendications 1 à 3, ou 6 à 9, comprenant en outre une couche de revêtement externe encapsulant l'élément de support en bois et la couche de substrat.

11. Produit buccal à base de nicotine à mâcher selon la revendication 10, dans lequel la couche de revêtement externe comprend au moins un sucre ou un alcool de sucre.

12. Produit buccal à base de nicotine à mâcher selon l'une quelconque des revendications précédentes, dans lequel l'élément de support en bois est imprégné d'un ou plusieurs additifs.

13. Produit buccal à base de nicotine à mâcher selon la revendication 12, dans lequel l'élément de support en bois est imprégné de xylitol.
